Europäisches Patentamt

European Patent Office

Office européen des brevets

(11) Veröffentlichungsnummer: **0 239 759 B1**

(19)

(12) **EUROPÄISCHE PATENTSCHRIFT**

(12)

(45) Veröffentlichungstag der Patentschrift: **27.05.92**

(21) Anmeldenummer: **87101933.7**

(22) Anmeldetag: **12.02.87**

(51) Int. Cl.⁵: **G02B** 5/00, G21K 1/04

(54) **Blende mit kontinuierlich veränderbarer wirksamer Blendenöffnung für diffraktometrische Messeinrichtungen.**

(30) Priorität: **17.02.86 DE 3604935**

(43) Veröffentlichungstag der Anmeldung:
**07.10.87 Patentblatt 87/41**

(45) Bekanntmachung des Hinweises auf die
Patenterteilung:
**27.05.92 Patentblatt 92/22**

(84) Benannte Vertragsstaaten:
**DE FR GB IT**

(56) Entgegenhaltungen:
**EP-A- 0 142 841      DE-A- 1 648 881
DE-A- 2 404 194      DE-A- 3 436 866
DE-C- 1 198 586      US-A- 3 023 314**

**SOVIET INVENTIONS ILLUSTRATED, Sektion
P/O, Woche 84/13, 9. Mai 1984, Zusammenfassung Nr. 080441/13, Derwent Publications
Ltd., London, GB; & SU - A - 1 021 845**

(73) Patentinhaber: **SIEMENS AKTIENGESELL-
SCHAFT
Wittelsbacherplatz 2
W-8000 München 2(DE)**

(72) Erfinder: **Harm, Bruno, Dr. Dipl.-Phys.
Bruchwaldstrasse 58
W-7500 Karlsruhe 41(DE)**

## Beschreibung

Die Erfindung bezieht sich auf eine Blende mit kontinuierlich veränderbarer wirksamer Blendenöffnung für diffraktometrische Meßeinrichtungen, insbesondere für Röntgendiffraktometer.

Eine derartige Blende ist beispielsweise aus der DE-PS 1 198 586 bekannt.

Um der Forderung zu genügen, die bestrahlte Fläche der Probe bei der Drehung um den Probendrehwinkel Θ konstantzuhalten, wird dort eine Aperturblende mit zwei Blendenbacken konstanten Abstands eingesetzt, die um die Mittellinie zwischen den Blendenbacken so drehbar angeordnet ist, daß die Blendenebene bei allen Beugungswinkeln stets parallel zur Oberfläche der drehbaren Probe steht. Dies wird dadurch bewerkstelligt, daß die Drehung der Aperturblende mit der Drehung der Probe mechanisch gekoppelt ist.

Es sind auch Blenden bekannt, z. B. aus der US-PS 3 023 314, die aus zwei die Blendenbacken bildenden Teilen bestehen, die um außerhalb der Blendenebene liegende, senkrecht zur Strahlrichtung stehende Achsen derart schwenkbar sind, daß sie etwa in der Blendenebene gegeneinander beweglich sind.

Schwierigkeiten bei den bekannten Blenden ergeben sich insbesondere dann, wenn der Aperturwinkel sehr klein wird und gegen Null geht, praktisch unterhalb einem Aperturwinkel von 3°. Soll die erforderliche Reproduzierbarkeit der Blendeneinstellung bei kleinen Aperturwinkeln und eine maximal zulässige Diskontinuität der Blendenweitenintervalle bei inkrementaler Verstellung $\frac{dw}{w}$ von ≤ 1 % eingehalten werden, so läßt sich dies nur mit einer teuren und aufwendigen Mechanik erreichen.

Es besteht demgemäß die Aufgabe, eine Blende der eingangs genannten Art zu schaffen, bei der die genannten Bedingungen ohne aufwendige mechanische Antriebsmittel eingehalten werden können.

Eine Lösung der Aufgabe ist mit einer Blende gegeben, welche die Merkmale des Anspruchs 1 aufweist.

Bei einer bevorzugten Ausführungsform werden die Blendenflügel mit Hilfe eines elektrischen Schrittmotors und eines Kulissengetriebes gegenläufig um jeweils gleiche Drehwinkel geschwenkt. Die Ansteuerung des Schrittmotors erfolgt elektrisch in funktioneller Abhängigkeit von dem Probendrehwinkel Θ.

Ein besonderer Vorteil ist darin zu sehen, daß die Blende mit ihrem Antrieb eine eigenständige Einheit darstellt, deren Öffnungsverlauf, einmal einjustiert, weitgehend unabhängig vom Einbau ist. Sie kann infolgedessen beim Hersteller eingestellt und die erforderliche Steuerstrategie kann von vornherein festgelegt werden.

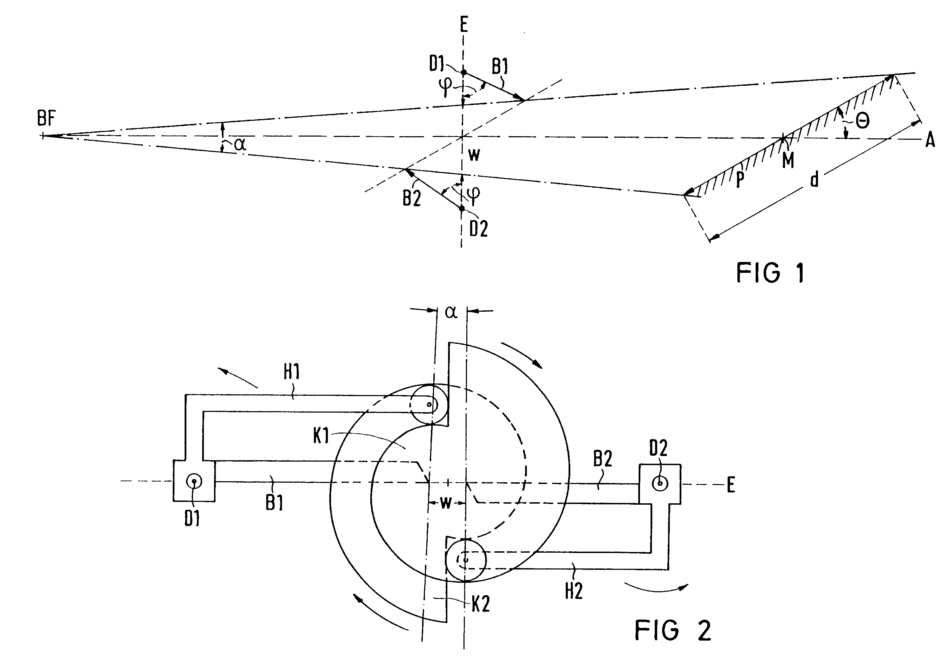

Die Erfindung wird nachstehend anhand des in der Figur 1 dargestellten Funktionsprinzips und eines in der Figur 2 dargestellten Ausführungsbeispiels erläutert und beschrieben.

Figur 1: Eine von dem Fokalpunkt einer Strahlungsquelle, beispielsweise dem Brennfleck BF einer Röntgenröhre, ausgehende Strahlung fällt auf die in einem hier nicht dargestellten Goniometerkopf eines Röntgendiffraktometers eingespannte Probe P, die um eine durch den Mittelpunkt M gehende Achse um den Probendrehwinkel Θ drehbar ist.

Um der Forderung nachzukommen, daß die bestrahlte Fläche der Probe mit dem Durchmesser d über den gesamten Winkelbereich von 90° ≥ Θ ≥ 0,1° in etwa gleich bleibt, muß der Aperturwinkel α des vom Brennfleck BF ausgehenden Strahls mit kleiner werdendem Probendrehwinkel Θ ebenfalls verkleinert werden.

Dies geschieht mit Hilfe einer Aperturblende.

Sie besteht aus zwei um Drehachsen D1 und D2 schwenkbaren Blendenflügeln B1 und B2. Die Drehachsen D1 und D2 liegen in einer zur Strahlmittelachse A senkrechten Ebene E.

Die von den einander gegenüberstehenden Kanten der Blendenflügel B1 und B2 begrenzte wirksame Blendenöffnung w, die den Aperturwinkel α des Strahls bestimmt, läßt sich durch Drehung der Blendenflügel B1 und B2 jeweils um den Blendendrehwinkel φ in Abhängigkeit von dem Drehwinkel Θ der Probe P einstellen. Es wird vorzugsweise ein elektrisch in Abhängigkeit von Θ gesteuerter Schrittmotor zur Verstellung der Blendenflügel eingesetzt.

Figur 2 zeigt eine Ausführungsform der erfindungsgemäßen Drehblende in schematischer Darstellung. Die Blendenflügel B1 und B2 befinden sich in Null-Stellung, d. h. in der Blendenebene E, die minimale Blendenweite w entspricht einem für die Praxis ausreichenden Aperturwinkel α von etwa 0,1°.

Zur gegenläufigen Bewegung der Blendenflügel B1 und B2 um ihre Drehpunkte D1 und D2 ist ein Kulissengetriebe vorgesehen, das aus zwei koaxialen, um 180° gegeneinander versetzten gleichartigen Kurvenscheiben K1 und K2 besteht, auf deren Umfang die freien Enden von mit den Blendenflügeln B1 und B2 verbundenen Hebeln H1 und H2 gleiten.

Als gemeinsamer Antrieb für die Kurvenscheiben K1 und K2 ist ein hier nicht gezeichneter, einfacher Schrittmotor vorgesehen, der im Halbschrittverfahren 400 Schritte/Umdrehung macht.

Die Diskontinuität der Blendenweitenverstellung dw/w läßt sich so mit einfachen Mitteln unterhalb des geforderten Werts von 1 % halten.

**Patentansprüche**

1. Blende mit kontinuierlich veränderbarer wirksamer Blendenöffnung für diffraktometrische Meßeinrichtungen, **gekennzeichnet durch** zwei Blendenflügel, deren einander gegenüberliegende Kanten die Blendenweite (w) bestimmen und die um zwei in einer zur Strahlrichtung senkrechten Ebene (E) in den Ebenen der Blendenflügel liegende Drehachsen (D1, D2) schwenkbar sind.

2. Blende nach Anspruch 1, **dadurch gekennzeichnet,** daß die beiden Blendenflügel (B1, B2) in ihrer Nullstellung einen der minimalen Blendenweite entsprechenden Abstand voneinander haben.

3. Blende nach Anspruch 1 oder 2, **dadurch gekennzeichnet**, daß die Blendenflügel (B1 und B2) mittels eines Antriebs um jeweils gleiche Drehwinkel ($\phi$) schwenkbar sind.

4. Blende nach Anspruch 3, **dadurch gekennzeichnet,** daß der Antrieb aus einem Schrittmotor und einem Kulissengetriebe besteht.

5. Blende nach Anspruch 4, **dadurch gekennzeichnet,** daß das Kulissengetriebe aus Zwei koaxialen, um 180° gegeneinander versetzten gleichartigen Kurvenscheiben (K1, K2) besteht, auf deren Umfang die freien Enden von mit den Blendenflügeln (B1, B2) verbundenen Hebeln (H1, H2) gleiten.

6. Blende nach Anspruch 5, **dadurch gekennzeichnet,** daß der Schrittmotor im Halbschrittverfahren 400 Schritte/Umdrehung macht.

7. Verwendung der Blende nach einem oder mehreren der vorhergehenden Ansprüche als Aperturblende in einem Röntgendiffraktometer zwischen Strahlenquelle (BF) und Probe (P).

8. Verwendung der Blende nach einem oder mehreren der vorhergehenden Ansprüche als Streustrahlenblende in einem Röntgendiffraktometer zwischen Probe und Detektor.

## Claims

1. Diaphragm with continuously variable diaphragm aperture for diffractometric measuring devices, characterised by two diaphragm blades, whose opposite edges determine the diaphragm width (w) and which can be pivoted about two axes of rotation (D1, D2) lying in the planes of the diaphgragm blades in a plane (E) perpendicular to the radiation direction.

2. Diaphragm according to claim 1, characterised in that in their zero position the two diaphragm blades (B1, B2) are spaced apart by a distance corresponding to the minimum diaphragm width.

3. Diaphragm according to claim 1 or 2, characterised in that the diaphragm blades (B1 and B2) can be pivoted by means of a drive by the same angle of rotation ($\phi$) in each case.

4. Diaphragm according to claim 3, characterised in that the drive comprises a stepping motor and crank gears.

5. Diaphragm according to claim 4, characterised in that the crank gears comprise two similar co-axial cam discs (K1, K2) offset by 180° with respect to each other, on the circumference of which the free ends of levers (H1, H2) connected to the diaphragm blades (B1, B2) slide.

6. Diaphragm according to claim 5, characterised in that the stepping motor effects 400 steps per rotation in the half-step process.

7. Use of the diaphragm according to one or more than one of the preceding claims as an aperture diaphragm in an X-ray diffractometer between the radiation source (BF) and the specimen (P).

8. Use of the diaphragm according to one or more than one of the preceding claims as an anti-scatter diaphragm in an X-ray diffractometer between the specimen and the detector.

## Revendications

1. Diaphragme comportant une ouverture active modifiable continûment, pour des dispositifs de mesure par diffraction, caractérisé par deux plaques, dont les bords réciproquement opposés déterminent la largeur (w) du diaphragme et qui peuvent pivoter autour de deux axes de rotation (D1,D2) situés dans les plans des plaques du diaphragme et dans un plan (E) perpendiculaire à la direction du rayonnement.

2. Diaphragme suivant la revendication 1, caractérisé par le fait que dans leur position zéro, les deux plaques (B1,B2) du diaphragme sont séparées par une distance correspondant à la largeur minimale du diaphragme.

3. Diaphragme suivant la revendication 1 ou 2, caractérisé par le fait que les plaques (B1 et B2) du diaphragme peuvent pivoter respectivement sur des angles de rotation ($\phi$), au moyen d'un dispositif d'entraînement.

4.  Diaphragme suivant la revendication 3, caractérisé par le fait que le dispositif d'entraînement est constitué par un moteur pas-à-pas et une transmission à coulisse.

5.  Diaphragme suivant la revendication 4, caractérisé par le fait que la transmission à coulisse est constituée par deux disques à came (K1,K2) identiques, coaxiaux et décalés de 180° l'un par rapport à l'autre et sur le pourtour desquels glissent les extrémités libres de leviers (H1,H2) raccordées aux plaques (B1,B2) du diaphragme.

6.  Diaphragme suivant la revendication 5, caractérisé par le fait que le moteur pas-à-pas exécute 400 pas/rotation lors d'un procédé de déplacement à demi-pas.

7.  Application du diaphragme suivant une ou plusieurs des revendications précédentes en tant que diaphragme d'ouverture dans un diffractomètre à rayons X entre une source de rayonnement (BF) et un échantillon (P).

8.  Application du diaphragle suivant une ou plusieurs des revendications précédentes en tant que diaphragme du rayonnement diffusé dans un diffractomètre à rayons X, entre l'échantil-lon et le détecteur.

FIG 1

FIG 2